# EUROPÄISCHE PATENTSCHRIFT

(11) **EP 3 233 558 B1**
(45) Veröffentlichungstag und Bekanntmachung des Hinweises auf die Patenterteilung: **02.10.2019**
(21) Anmeldenummer: 15797039.3
(22) Anmeldetag: 11.11.2015
(51) Int. Cl.: B60K 37/02

(54) **TRÄGER UND FLÄCHENTRAGWERK**
CARRIER AND PLANE LOAD-BEARING STRUCTURE
SUPPORT ET STRUCTURE PORTEUSE PLANE

(30) Priorität: 16.12.2014 DE 102014226125
(43) Veröffentlichungstag der Anmeldung: 25.10.2017
(73) Patentinhaber: Robert Bosch GmbH, 70442 Stuttgart (DE)
(72) Erfinder: GANSER, Martin, 71263 Weil Der Stadt (DE)
(86) Internationale Anmeldenummer: PCT/EP2015/076322
(87) Internationale Veröffentlichungsnummer: WO 2016/096259

(56) Entgegenhaltungen:
- WO-A1-92/06828
- DE-A1- 2 152 590
- JP-A- 2006 131 041
- JP-A- 2014 113 856

## Beschreibung

### Stand der Technik

Aus der US 4,522,378 ist bereits ein einteiliges Bauteil aus einem Elastomer bekannt, das zur Befestigung eines weiteren Bauteils an einer Leiterplatte dient. Das Elastomer-Bauteil weist eine Öffnung für eine Schraube auf, mit der das Elastomer-Bauteil an der Leiterplatte befestigt wird. Das zu befestigende Bauteil greift über Öffnungen in das Elastomer-Bauteil ein. Das Elastomer-Bauteil ist zylindrisch aufgebaut und weist eine Oberseite und eine Unterseite auf. In die Oberseite und die Unterseite sind Öffnungen derart eingebracht, dass Rippen entstehen. Die auf der Oberseite und der Unterseite konzentrisch verlaufenden Rippen sind dabei derart angebracht, dass sich die Rippen auf der Oberseite und der Unterseite des Elastomer-Bauteils nicht unmittelbar gegenüberliegen. Über die Rippen wird die Anzugskraft der Schraube auf die Leiterplatte und eine Haltekraft für das zu haltende Bauteil abgestützt.

Aus dem Dokument DE 21 52 590 A1 ist ein Strang mit in Längsrichtung verlaufenden Rippen bekannt.

Aus dem Dokument JP 2006 131041 A ist eine Struktur in einer Mittelkonsole eines Fahrzeugs bekannt.

Aus der JP 2014 113856 A ist ein Display für ein Fahrzeug mit einem Gehäuse bekannt.

Aus der WO 92/06828 A1 ist eine Rasierklingeneinheit mit einem Gehäuse bekannt.

### Offenbarung der Erfindung

### Vorteile der Erfindung

Der erfindungsgemäße Träger für eine Anzeigeeinrichtung weist demgegenüber eine Trägerplatte auf, wobei die Trägerplatte zwei gegenüberliegende flächige Seiten aufweist und wobei an beiden Seiten jeweils mehrere Rippen einstückig angeformt sind, wobei die Rippen an beiden Seiten jeweils parallel zueinander in einer ersten Richtung ausgerichtet sind, wobei die Rippen an einer ersten und einer zweiten Seite des Trägers senkrecht zu der ersten Richtung in eine zweite Richtung derart versetzt zu der ersten Richtung verlaufen, dass sich die Rippen an der ersten und an der zweiten Seite nicht oder nicht vollquerschnittlich gegenüberliegen. Ein derartiger erfindungsgemäßer Träger hat demgegenüber den Vorteil, dass er in seiner Längsausdehnung biegestabiler ist als bei einer gegenüberliegenden Anordnung von Rippen oder bei einem Weglassen von Rippen. Damit kann der Träger nicht nur einerseits einen flächig über die Rippen auf ihn ausgeübten Druck leicht an die gegenüberliegende Seite und die dort angeordneten Rippen weitergeben, sondern er weist auch in Längsrichtung eine hohe Biegestabilität gegen eine Verdrehung oder gegen ein Verbiegen um seine Längsachse auf. Diese Stabilität kann dabei mit einer verhältnismäßig geringen Masse des Trägers erreicht werden, da der Träger durch die Rippenstruktur deutlich leichter ist als ein massives Bauteil, bei dem die Zwischenräume der Rippen aufgefüllt sind. Zugleich kann aber einerseits eine Kraftdurchleitung gut erfolgen, während andererseits der Träger sich einer Verbiegung wirkungsvoll entgegenstellt.

Durch die in abhängigen Ansprüchen aufgeführten Maßnahmen sind vorteilhafte Weiterbildungen und Verbesserungen des im unabhängigen Anspruch angegeben Trägers möglich. So ist es vorteilhaft, in wenigstens einer Rippe an wenigstens einer Seite der Trägerplatte Ausnehmungen zwischen einer Vorderkante der Rippe und der Seite der Trägerplatte einzubringen. Hierdurch kann die Masse des Trägers bei einer gleichbleibenden Stabilität des Trägers weiter verringert werden.

Erfindungsgemäß sind in die Trägerplatte von der ersten Seite zur zweiten Seite durchgehende Ausnehmungen eingebracht. Durch diese Maßnahme ist eine weitere Verringerung der Masse ohne eine negative Beeinträchtigung der Stabilität des Trägers möglich. Weiterhin ist es vorteilhaft, diese Maßnahme derart zu kombinieren, dass die Ausnehmung in der Trägerplatte auch denjenigen Bereich unterhalb einer Rippe umfassen, in dem die Rippe eine Ausnehmung aufweist.

Die Ausnehmungen können einerseits auf einfache Weise darstellbare Rechteckformen aufweisen, können andererseits aber auch abgerundete Ecken aufweisen, über die Kräfte stabiler übertragen werden können.

Zur Anpassung an eine jeweilige Kraftbelastung oder an Erfordernisse an den Bauraum können die Rippen auf wenigstens einer Seite eine unterschiedliche Höhe über der Trägerplatte bzw. einer unterschiedliche Breite aufweisen.

In entsprechender Weise kann der Träger auch an unterschiedlich einwirkende Kraftrichtungen dadurch angepasst werden, dass eine Rippe einen ersten Winkel zwischen einer ersten Seitenfläche der Rippe und der Trägerplatte unterschiedlich zu einem zweiten Winkel zwischen einer der ersten Seite gegenüberliegenden zweiten Seite der Rippe aufweist. Hierdurch kann die Rippe gegenüber der Trägerplatte schräg gestellt werden. Eine solche Schrägstellung kann auf einer Seite der Trägerplatte, aber auch auf beiden Seiten der Trägerplatte vorliegen.

Besonders vorteilhaft ist ein Flächentragwerk, geeignet für eine Anzeigeeinrichtung in einem Kraftfahrzeug, mit einem derartigen Träger auszustatten. Vor allem für die Verwendung in einem elektronischen Bauteil bietet der Träger einerseits den Vorteil, dass er eine hohe Stabilität mit leichter Masse gewährleistet. Anderseits ermöglichen die Rippen und in verstärktem Maße die in den Träger eingebrachten Ausnehmungen eine Luftventilation in dem elektronischen Bauteil. Somit kann der Träger einerseits das elektronische Bauteil ohne zu großen Massebedarf stabilisieren, während andererseits eine Kühlung von Komponenten des elektronischen Bauteils gewährleistet wird.

Weiterhin ist es vorteilhaft, an dem Träger eine Aufnahmeeinrichtung zur Aufnahme eines Befestigungsmittels anzuordnen, das benachbart zu dem Träger geführt ist. Hierdurch können Haltemittel, wie zum Beispiel Schrauben, aber auch Kabel mittels einem als Kabeldurchführung ausgebildeten Befestigungsmittel auf einfache Weise an dem Träger befestigt werden, wobei die Aufnahmeeinrichtung eine unmittelbare Aufnahme dieser Bauteile an den Träger überflüssig macht. Die Aufnahmeeinrichtung kann sich dabei in vorteilhafter Weise an dem Träger abstützen und somit das Befestigungsmittel vorteilhaft stabilisieren.

### Kurze Beschreibung der Zeichnungen

Ausführungsbeispiele der Erfindung sind in der Zeichnung dargestellt und in der nachfolgenden Beschreibung näher erläutert. Es zeigen:
Figur 1 eine Frontansicht einer Anzeigeeinrichtung in einem Kraftfahrzeug,
Figur 2 eine Seitenansicht einer erfindungsgemäßen Anzeigeeinrichtung in einem Kraftfahrzeug mit einem erfindungsgemäßen Flächentragwerk,
Figur 3 eine Aufsicht auf ein erfindungsgemäßes Flächentragwerk, insbesondere zur Verwendung in einer Anzeigeeinrichtung in einem Kraftfahrzeug,
Figur 4 eine perspektivische Ansicht eines ersten Ausführungsbeispiels eines erfindungsgemäßen Trägers,
Figur 5 eine perspektivische Ansicht eines zweiten erfindungsgemäßen Ausführungsbeispiels eines erfindungsgemäßen Trägers,
Figur 6 eine Seitenansicht des erfindungsgemäßen Trägers gemäß des zweiten Ausführungsbeispiels,
Figur 7 eine Aufsicht auf den erfindungsgemäßen Träger gemäß des zweiten Ausführungsbeispiels,
Figur 8 eine Schnittdarstellung gemäß einer ersten Schnittachse durch den erfindungsgemäßen Träger gemäß des zweiten Ausführungsbeispiels in der Figur 5,
Figur 9 eine zweite Schnittansicht durch den erfindungsgemäßen Träger gemäß des zweiten Ausführungsbeispiels gemäß der Figur 5,
Figur 10 eine Schnittansicht eines dritten erfindungsgemäßen Trägers,
Figur 11 eine perspektivische Ansicht einer Anordnung einer Aufnahmeeinrichtung an einem erfindungsgemäßen Flächentragwerk mit einem erfindungsgemäßen Träger.

### Ausführungsformen der Erfindung

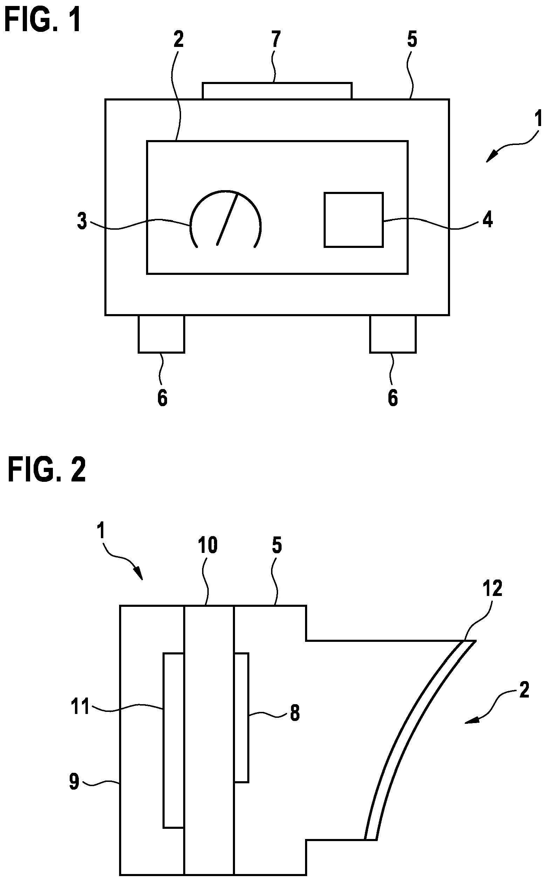

In der Figur 1 ist eine Anzeigevorrichtung 1 zur Verwendung in einem Kraftfahrzeug dargestellt. Die Anzeigevorrichtung 1 wird hierzu in eine Instrumententafel eines Kraftfahrzeugs eingebaut. In einem Anzeigefenster 2 sind beispielsweise Skalenanzeigen 3 oder Bildschirmanzeigen 4 sichtbar. Eine Ansteuerungselektronik ist in einem Gehäuse 5 der Anzeigevorrichtung 1 angeordnet. Das Gehäuse 5 ist über Halteösen 6 bzw. Rasthaken 7 mit der Instrumententafel verbunden, insbesondere verschraubt.

In der Figur 2 ist eine Seitenansicht der Anzeigevorrichtung 1 gemäß der Figur 1 dargestellt. Die Anzeigefläche 2 ist durch eine transparente Deckscheibe 12 geschützt, die an dem Gehäuse 5 befestigt ist. Das Gehäuse 5 wiederum ist über Schrauben bzw. Rastverbindungen auf ein Flächentragwerk 10 aufgesetzt. Das Flächentragwerk 10 dient beispielsweise der Anordnung einer Leiterplatte 11 bzw. der Anordnung einer Bildschirmanzeige 8, z.B. einer Flüssigkristallanzeige. Auch Zeiger, Schrittmotoren oder übrige elektronische Bauteile werden von dem Flächentragwerk 10 gehalten. Von der Rückseite ist die Anzeigevorrichtung 1 durch eine Rückwand 9 abgedeckt.

Die Anzeigevorrichtung 1 ist in dem Kraftfahrzeug sowohl Erschütterungen, als auch thermischer Beanspruchung durch Erwärmung während des Betriebs und Abkühlung im Stand ausgesetzt. Das Flächentragwerk 10 dient dabei dazu, die elektronischen Bauteile auch unter Berücksichtigung dieses physikalischen Stresses einerseits sicher zu halten und derart zu lagern, dass eine störungsfreie Anzeige gewährleistet ist. Dabei muss verhindert werden, dass sich das Flächentragwerk 10 durch thermische Beanspruchung verzieht bzw. dass sich an dem Flächentragwerk befestigte Elemente einschließlich des Gehäuses 5 und der Rückwand 9 während des Betriebs lösen. Daher ist es erforderlich, dass das Flächentragwerk 10 eine entsprechende Stabilität aufweist.

Da die Anzeigeeinrichtung 1 in einer Instrumententafel des Kraftfahrzeugs angeordnet ist, kommt es ferner bei einem Betrieb insbesondere der auf der Leiterplatte 11 angeordneten Bauelemente zu einer Erwärmung. Da die Bauelemente auf beiden Seiten des Flächentragwerks 10 angeordnet sein können, ist es wünschenswert, dass ein Luftaustausch zwischen einem durch die Rückwand 9 abgedeckten Volumen und einem Innenraum des Gehäuses 5 erfolgen kann. Zudem ist es erforderlich, die auf der einem Betrachter und damit der Deckscheibe 12 zugewandten Seite des Flächentragwerks 10 zugeordneten Bauteile elektrisch zu kontaktieren. Hierzu sind Öffnungen in dem Flächentragwerk 10 vorgesehen. Damit besteht ein Konstruktionswiderspruch dahingehend, dass einerseits das Flächentragwerk 10 möglichst stabil sein soll, andererseits aber auch zahlreiche Öffnungen z.B. für elektrische Kontakte oder einen Luftaustausch aufweisen soll. Zudem soll es möglichst wenig Bauraum und insbesondere möglichst wenig Masse einnehmen, damit die Anzeigeeinrichtung 1 möglichst leicht ausgeführt werden kann, um einen Energieverbrauch des Fahrzeugs gering halten zu können.

Entsprechende Anforderungen ergeben sich nicht nur für die hier gezeigte Anzeigeeinrichtung in einem Kraftfahrzeug, sondern auch für eine Verwendung in anderen elektronische Bauteile in einem Kraftfahrzeug oder außerhalb eines Kraftfahrzeugs.

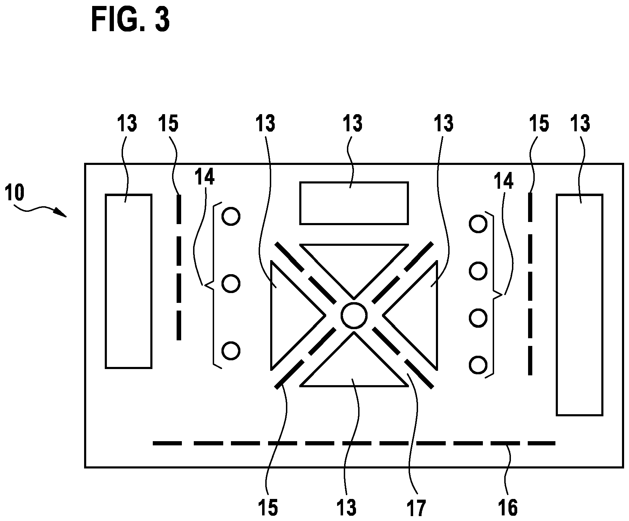

In der Figur 3 ist eine Aufsicht auf das Flächentragwerk 10 gezeigt. Das Flächentragwerk 10, dass insbesondere aus einem Kunststoffmaterial, z.B. Polykarbonat oder Akrylnitril-Butadien-Stryrol (ABS), vorzugweise in einem Spritzgussverfahren hergestellt ist, weist Öffnungen 13 auf, die beispielsweise der Durchführung elektronischer Bauteile oder der Belüftung dienen. Ferner sind Bohrlöcher 14 vorgesehen, durch die mechanische oder elektrische Bauteile, wie beispielsweise Leuchtdioden, eine Zeigerwelle oder Kabel, hindurchgeführt werden. Benachbart zu den Öffnungen sind gestrichelt Bereiche 15 dargestellt, in denen aufgrund der Öffnung in das Flächentragwerk 10 eine besonders hohe Anforderung an eine Stabilität, insbesondere eine Biegestabilität, des Flächentragwerks 10 gegeben ist. Um ein Zerbrechen in einem Crash-Fall zu verhindern, ist auch eine besondere Stabilität an einer Unterseite 16 gefordert, die ebenfalls durch eine gestrichelte Linie in der Figur 3 dargestellt ist. Insbesondere an diesen hervorgehobenen Bereichen kann der im Folgenden erläuterte, erfindungsgemäße Träger in einem Flächentragwerk eingesetzt werden.

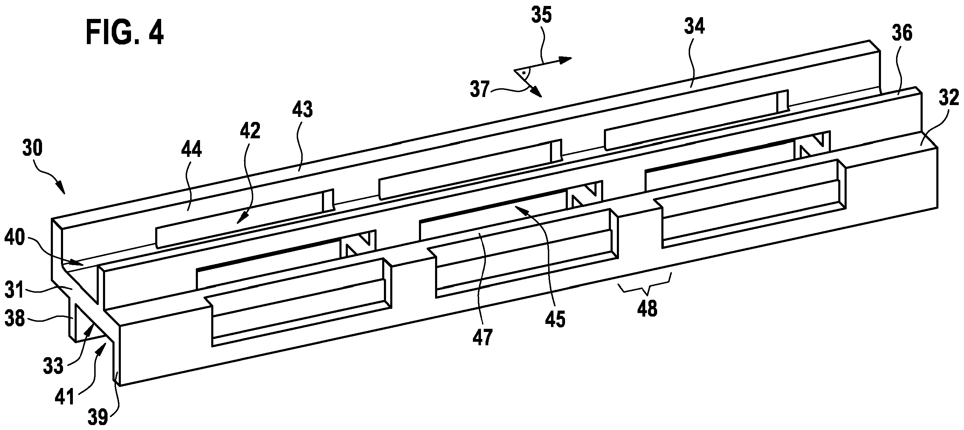

In der Figur 4 ist ein erfindungsgemäßer Träger 30 dargestellt, der beispielsweise in dem Flächentragwerk 10 gemäß der Figur 3 integriert ist. Jedoch ist auch eine Verwendung des Trägers 30 außerhalb eines Flächentragwerks möglich. In dem vorliegenden Ausführungsbeispiel ist der Träger 30 als ein Steg zwischen zwei Bereichen des Flächentragwerks 10 ausgebildet, zum Bespiel als Steg 17 zwischen zwei Öffnungen 13 oder in einem Bereich 16 zur Stabilisierung des Flächentragwerks.

Der Träger 30 weist hierbei eine Trägerplatte 31 mit einer ersten Seitenfläche 32 und einer zweiten Seitenfläche 33 auf, wobei sich die erste und die zweite Seitenfläche 32, 33 gegenüberliegen. Die erste Seitenfläche 32 bildet damit eine Oberseite der Trägerplatte 31 und die zweite Seitenfläche 33 eine Unterseite. Auf die erste Seitenfläche 32 ist eine erste Rippe 34 angeformt, die in einer ersten Längsrichtung 35 ausgerichtet ist. Die erste Längsrichtung 35 ist in der Figur 4 schematisch dargestellt und verläuft in der Ebene der Trägerplatte 31. Parallel hierzu ist in der gleichen Längsrichtung 35 ausgerichtet eine zweite Rippe 36 an die erste Seitenfläche 32 der Trägerplatte 31 einstückig angeformt. Die zweite Rippe 36 ist gegenüber der ersten Rippe 34 um einen vorgegebenen Abstand versetzt an der ersten Seitenfläche 32 der Trägerplatte 31 angeordnet. Die beiden Rippen sind hierbei in einer zweiten Richtung 37 gegeneinander versetzt, wobei die zweite Richtung 37 senkrecht zu der ersten Richtung in der Ebene der Trägerplatte 31 ausgerichtet ist. Die Rippen 34, 36 weisen beispielsweise einen im Wesentlichen rechteckigen Querschnitt auf und erheben sich in einem rechten Winkel gegenüber der ersten Seitenfläche 32 der Trägerplatte 31.

Auf der der ersten Seite 32 gegenüberliegenden zweiten Seitenfläche 33 sind eine dritte Rippe 38 und eine vierte Rippe 39 einstückig an die Trägerplatte 31 angeformt. Die dritte und vierte Rippe 38, 39 sind dabei ebenfalls entlang der ersten Richtung 35 parallel zu der ersten und der zweiten Rippe 34, 36 ausgerichtet. Sie sind dabei jedoch um einen Betrag versetzt gegenüber der ersten Rippe 34 und 36 derart an der Unterseite 33 angeordnet, so dass sich die erste und zweite Rippe 34, 36 nicht der dritten oder der vierten Rippe 38, 39 gegenüberliegen. Vielmehr weisen die dritte und die vierte Rippe jeweils zu der ersten und der zweiten Rippe einen Abstand in der zweiten Richtung 37 auf. In einer anderen Ausführungsform sind die Rippen zumindest derart angeordnet, dass sie sich nicht vollquerschnittlich gegenüberliegen.

In der hier dargestellten Ausführungsform entsteht durch die Ausbildung der Rippen sowohl auf der Oberseite 32, als auch auf der Unterseite 33 ein lateral zueinander versetztes Profil 40, 41 an der Trägerplatte 31.

In einer Ausführungsform weisen die Rippen dabei in der zweiten Richtung 37 eine Ausdehnung auf, die zwischen 30% und 70% einer Dicke der Trägerplatte 31 zwischen den beiden Seitenflächen 32, 33 liegen. Ferner weisen die Rippen in einer Richtung senkrecht zu den Seitenflächen 32, 33 der Trägerplatte 31 eine Ausdehnung auf, die zwischen der Dicke der Trägerplatte und dem Vierfachen der Dicke der Trägerplatte 31 liegt. Dicke und Breite der Rippen können sich auf einer Seite, aber auch auf beiden Seiten unterscheiden. Hierdurch ist eine Anpassung an die individuelle erwartete Kraftbeaufschlagung des Trägers möglich.

In der hier gezeigten Ausführungsform ist in die erste Rippe 34 eine Ausnehmung 42 eingebracht, die zwischen der ersten Seitenfläche 32 und einer Oberseite 43 der Rippe verläuft. Die Ausnehmung kann sich dabei zwischen einer Höhe von 20% und 70% der Rippe erstrecken, so dass über der Ausnehmung ein Steg 44 entsteht. Ausnehmungen 42 können sich entlang des Verlaufs der Rippe regelmäßig, aber auch unregelmäßig wiederholen. Es können hierbei zwischen 10% und 80% der Rippenfläche, bevorzugt 70% der Rippenfläche, ausgenommen werden. Entsprechende Ausnehmungen können auch in die übrigen Rippen eingebracht werden, wie es in der Figur 4 dargestellt ist. Die Ausnehmung weist hierbei einen rechteckigen Querschnitt auf.

Erfindungsgemäß sind, wie in der Figur 4 dargestellt, auch Ausnehmungen in die Trägerplatte 31eingebracht. So ist beispielsweise in einem Bereich zwischen der ersten und der zweiten Rippe 34, 36 eine Ausnehmung 45 in die Trägerplatte 31 eingebracht. Die Ausnehmungen 45 in der Trägerplatte können dabei ebenfalls regelmäßig wiederholend entlang der ersten Richtung 35, aber auch entlang der zweiten Richtung 37 in die Trägerplatte 31 eingebracht werden. Hierbei verbleiben Stege 47. In der hier gezeigten Ausführungsform können sich Ausnehmungen aus der Rippe und aus der Trägerplatte aneinander anschließen, wodurch eine sehr leichte Struktur ermöglicht wird. Hierbei sollten die Ausnehmungen aus den Rippen mit den Ausnehmungen aus der Trägerplatte derart übereinstimmen, dass wiederholt Bereiche 48 in dem Träger 30 entstehen, in denen keine Ausnehmungen vorgesehen sind. Solche Bereiche ohne Ausnehmungen können zwischen 10% und 90%, bevorzugt zwischen 20% und 40% der Länge des Trägers einnehmen, falls Ausnehmungen vorgesehen werden.

In einer ersten Ausführungsform kann der Träger aus einem Kunststoffmaterial, insbesondere in einem Spritzgussverfahren hergestellt werden. Ferner ist es aber auch möglich, den Träger aus einem Metall, insbesondere einem Leichtmetall, wie beispielsweise Aluminium oder Magnesium oder einer entsprechenden Leichtmetalllegierung herzustellen, beispielsweise durch ein Gießverfahren. Damit kann der Träger neben seiner Tragefunktion auch die Funktion eines Kühlkörpers ausüben. Durch die Einbringung von Ausnehmungen vergrößert sich dabei die Oberfläche des Kühlkörpers, so dass Wärme besser an einen durch die Öffnungen hindurchgeführten Fluidstrom, beispielsweise einen Luftstrom, abgegeben werden kann.

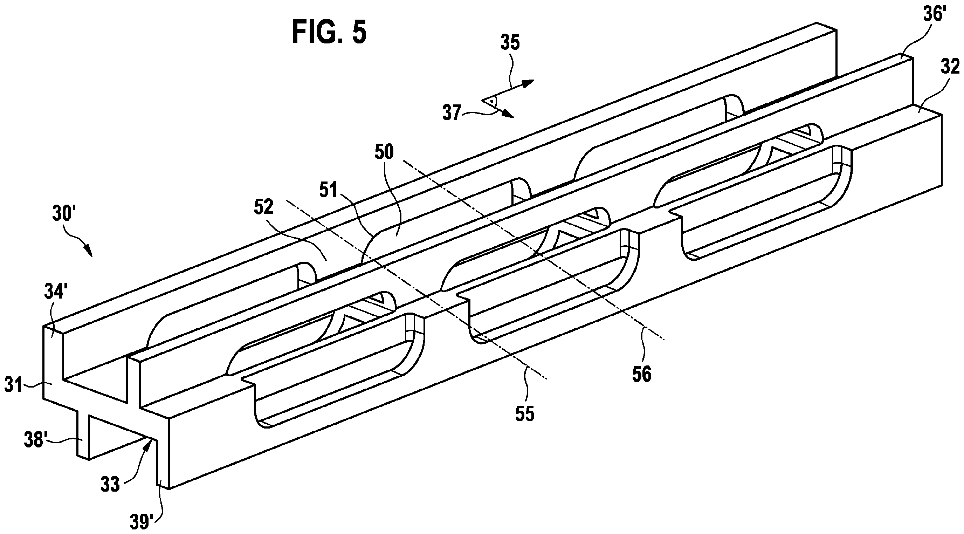

In der Figur 5 ist ein zweites Ausführungsbeispiel des Trägers gemäß der Figur 4 dargestellt. An eine Trägerplatte 31 sind eine erste Rippe 34' und eine zweite Rippe 36' auf der ersten Seitenfläche 32 und auf der zweiten Seitenfläche 33 eine dritte Rippe 38' und eine vierte Rippe 39' angeformt. Die in der Figur 5 dargestellten Rippen 34', 36' 38' und 39' unterscheiden sich von den Rippen 34, 36, 38 und 39 gemäß der Figur 4 dadurch, dass sie Ausnehmungen 50 aufweisen, die an der der Trägerplatte abgewandten Seite keine Ecke mit einem rechten Winkel sondern eine Ecke mit einer abgerundeten Kante 51 aufweisen. Hierdurch ist es möglich, auf die Rippen 34', 36', 38' und 39' wirkenden Kräfte durch die somit entstehenden säulenartigen Verbindungen 52 zu der Trägerplatte 31 abzuleiten.

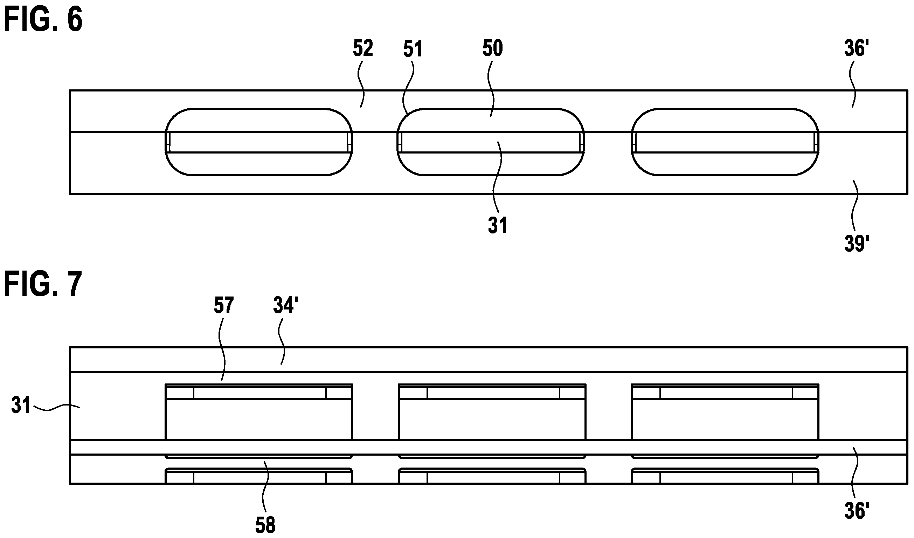

Dies ist auch auf einer Seitenansicht gemäß der Figur 6 ersichtlich. In entsprechender Weise zu der Figur 4 können sich Ausnehmungen sowohl in der Trägerplatte 31, als auch in den Rippen wiederholen. Hierbei sind die Ausnehmungen, die in die Trägerplatte 31 eingebracht sind, weiterhin mit rechtwinkligen Ecken ausgeführt, wie es sich aus der Aufsicht auf den Träger 30' gemäß der Figur 5 in der Figur 7 ergibt.

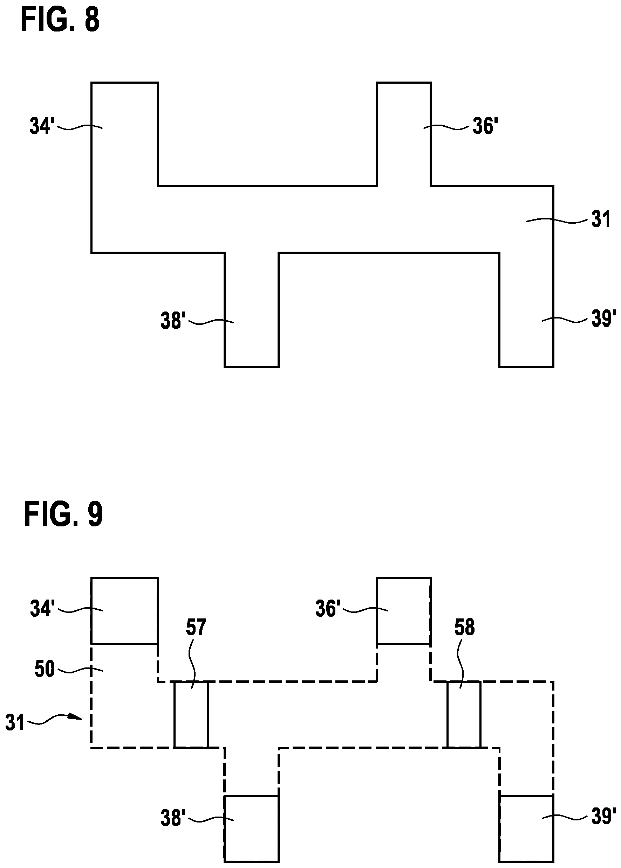

In der Figur 8 ist eine Schnittdarstellung durch den Träger 30' entlang der Linie 55 in der Figur 5 dargestellt. In einer Ausführungsform, bei der keine Ausnehmungen in den Träger eingebracht sind, stellt die Schnittdarstellung gemäß der Figur 8 den Schnitt gemäß des Ausführungsbeispiels für den gesamten Träger dar.

In der Figur 9 ist eine Schnittdarstellung durch den Träger entlang einer Schnittlinie 56 gemäß der Figur 5 dargestellt. In diesem Bereich verbleibt von der Trägerplatte 31 nur ein auch in der Figur 7 dargestellter erster Stegbereich 57 und zweiter Stegbereich 58. Gestrichelt sind in der Figur 9 diejenigen Bereiche dargestellt, aus denen Ausnehmungen herausgenommen worden sind, beispielsweise die Ausnehmung 50 zwischen dem Bereich der Trägerplatte 31 und der ersten Rippe 34'.

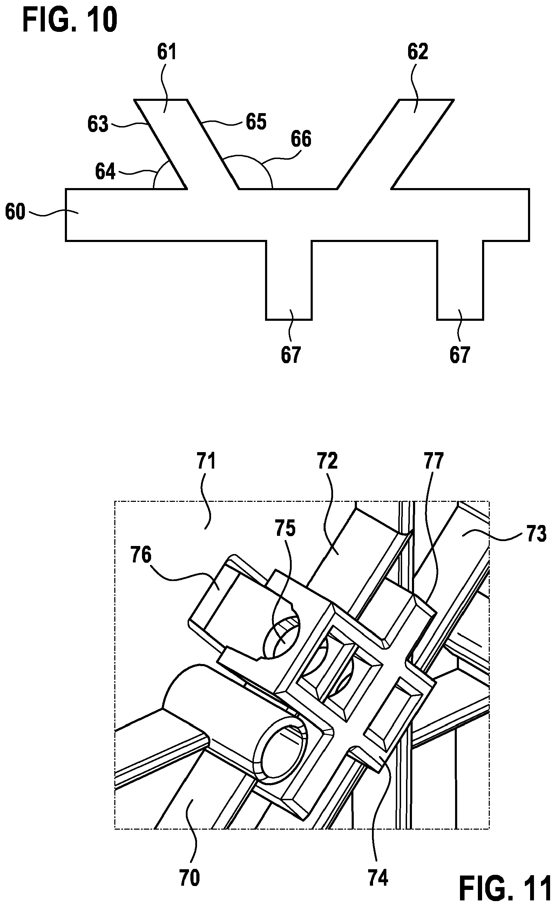

In der Figur 10 ist ein weiteres Ausführungsbeispiel dargestellt, bei dem an einer Trägerplatte 60 eine erste Rippe 61 und eine zweite Rippe 62 angeformt sind. Die erste Rippe 61 schließt mit ihrer ersten Seitenfläche 63 einen ersten Winkel 64 und mit ihrer zweiten Seitenfläche 65 einen zweiten Winkel 66 ein, wobei der erste und der zweite Winkel 64, 66 ungleich zueinander sind. Hiermit wird eine Schrägstellung der ersten Rippe 61 gegenüber der Trägerplatte 60 erreicht. Die zweite Rippe 62 kann in einem anderen Winkel zu der ersten Rippe 61 angeordnet sein. Auf der gegenüberliegenden Seite der Trägerplatte 60 können erfindungsgemäß versetzt hierzu angeordnete Rippen 67 auch in einem rechten Winkel oder in einem anderen Winkel angeordnet ein. Hierdurch ist eine Anpassung an verschiedene Bauraumformen oder Kraftanforderungen möglich.

In den hier gezeigten Ausführungsbeispielen sind jeweils zwei Rippen auf einer ersten Seite und zwei Rippen auf einer gegenüberliegenden Seite angeordnet. Es können jedoch auch beliebig viele Rippen auf beiden Seiten jeweils parallel und erfindungsgemäß versetzt zueinander angeordnet werden.

In der Figur 11 ist ein Träger 70 dargestellt, der an einem Flächentragwerk 71 angeordnet ist. Zwischen einer ersten Rippe und einer zweiten Rippe 73 ist eine Aufnahmeeinrichtung 74 eingesetzt, die in dem hier gezeigten Ausführungsbeispiel eine Öffnung 75 zur Kabeldurchführung aufweist. Die Aufnahmeeinrichtung 74 greift dabei in eine Öffnung 76 in dem Flächentragwerk 71 ein, so dass ein Kabel aus der Öffnung 76 in dem Flächentragwerk 71 in die Öffnung 75 der Aufnahmeeinrichtung 74 geführt und aus einer zweiten Öffnung an einer Seite 77 der Aufnahmeeinrichtung 74 ausgeführt werden kann. Hiermit ist eine sichere, vibrationsarme Halterung einer Kabeldurchführung mittels der Aufnahmeeinrichtung 74 an dem Flächentragwerk 71 gewährleistet. Die entsprechenden, zu den Rippen 72, 73 korrespondierenden auf der in der Figur 11 nicht sichtbaren Rückseite des Flächentragwerks angeordneten Rippen, die in erfindungsgemäßer Weise versetzt zu der ersten und der zweiten Rippe 72, 73 angeordnet sind, sind in der Figur 11 nicht dargestellt. In einer anderen Ausführungsform kann die Aufnahmeeinrichtung auch dazu ausgebildet sein, ein Halteelement, wie beispielsweise eine Schraube oder einen Rasthaken bzw. eine Axialführung, ein Drehlager oder einen Lichtleiter aufzunehmen.

## Patentansprüche

1. Träger, geeignet für eine Anzeigeeinrichtung, mit einer Trägerplatte (31), wobei die Trägerplatte (31) zwei gegenüberliegende flächige Seiten (32, 33) aufweist, wobei an beide Seiten (32, 33) jeweils mehrere Rippen (34, 36, 38, 39) einstückig angeformt sind, wobei die Rippen (34, 36, 38, 39) an beiden Seiten (32, 33) jeweils parallel zueinander ausgerichtet sind, wobei die Rippen (34, 36, 38, 39) an beiden Seiten (32, 33) in derselben, ersten Richtung (35) ausgerichtet sind, wobei die Rippen (34, 36) an einer ersten Seite (32) in eine zweite Richtung (37) senkrecht zu der ersten Richtung (35) derart versetzt zu den Rippen (36, 38) an der der ersten Seite (32) gegenüberliegenden zweiten Seite (33) angeordnet sind, dass sich die Rippen an der ersten (32) und an der zweiten (33) Seite nicht oder nicht vollquerschnittlich gegenüberliegen und wobei in die Trägerplatte (31) von der ersten Seite (32) zur zweiten Seite (33) durchgehende Ausnehmungen (45) eingebracht sind.

2. Träger nach Anspruch 1, **dadurch gekennzeichnet, dass** in wenigstens eine Rippe (34, 36, 38, 39) an wenigstens einer Seite Ausnehmungen (42, 50) zwischen einer Vorderkante (43) der Rippe (34, 36, 38, 39) und der Seite (32, 33) eingebracht sind.

3. Träger nach Anspruch 2, **dadurch gekennzeichnet, dass** die Ausnehmungen (45) in der Trägerplatte (31) auch denjenigen Bereich unterhalb einer Rippe umfasst, in dem die Rippe (34) eine Ausnehmung (42) aufweist.

4. Träger nach einem der vorhergehenden Ansprüche, **dadurch gekennzeichnet, dass** wenigstens ein Teil der Ausnehmungen (42, 45, 50) eine Rechteckform aufweist.

5. Träger nach Anspruch 4, **dadurch gekennzeichnet, dass** die Rechteckform abgerundete Ecken aufweist.

6. Träger nach einem der vorhergehenden Ansprüche, **dadurch gekennzeichnet, dass** die Rippen (34, 36, 38, 39) auf wenigstens einer Seite eine unterschiedliche Höhe gegenüber der Trägerplatte (31) und/oder eine unterschiedliche Breite aufweisen.

7. Träger nach einem der vorhergehenden Ansprüche, **dadurch gekennzeichnet, dass** für wenigstens eine Rippe (61) ein erster Winkel (64) zwischen einer ersten Seitenfläche (63) der Rippe (61) und der Trägerplatte (31) unterschiedliche zu einem zweiten Winkel (66) zwischen einer der erstem Seite gegenüberliegenden zweiten Seite (65) der Rippe und der Trägerplatte (31) ist.

8. Flächentragwerk, geeignet für eine Anzeigeeinrichtung in einem Kraftfahrzeug, mit wenigstens einem Träger (30) nach einem der vorhergehenden Ansprüche.

9. Flächentragwerk nach Anspruch 8, **dadurch gekennzeichnet, dass** an dem Träger zwischen den Rippen eine Aufnahmeeinrichtung (74) zur Aufnahme wenigstens eines Befestigungsmittels angeordnet ist und dass das Befestigungsmittel benachbart zu dem Träger geführt ist.

## Claims

1. Carrier, suitable for a display device, having a carrier plate (31),
wherein the carrier plate (31) has two opposite flat sides (32, 33), wherein multiple ribs (34, 36, 38, 39) are each moulded on in one piece on both sides (32, 33), wherein the ribs (34, 36, 38, 39) on both sides (32, 33) are each oriented parallel to one another, wherein the ribs (34, 36, 38, 39) on both sides (32, 33) are oriented in the same, first direction (35), wherein the ribs (34, 36) on a first side (32) are offset relative to the ribs (36, 38) on the second side (33), opposite to the first side (32), in a second direction (37) perpendicular to the first direction (35), in such a way that the ribs on the first (32) and on the second (33) side are not or not fully cross-sectionally located opposite each other, and wherein cut-outs (45) going through from the first side (32) to the second side (33) are introduced into the carrier plate (31).

2. Carrier according to Claim 1, **characterized in that** cut-outs (42, 50) between a front edge (43) of the rib (34, 36, 38, 39) and the side (32, 33) are introduced into at least one rib (34, 36, 38, 39) on at least one side.

3. Carrier according to Claim 2, **characterized in that** the cut-outs (45) in the carrier plate (31) also include that region underneath a rib in which the rib (34) has a cut-out (42).

4. Carrier according to one of the preceding claims, **characterized in that** at least some of the cut-outs (42, 45, 50) have a rectangular shape.

5. Carrier according to Claim 4, **characterized in that** the rectangular shape has rounded corners.

6. Carrier according to one of the preceding claims, **characterized in that** the ribs (34, 36, 38, 39) at least one side have a different height relative to the carrier plate (31) and/or a different width.

7. Carrier according to one of the preceding claims, **characterized in that** for at least one rib (61), a first angle (64) between a first side face (63) of the rib (61) and the carrier plate (31) is different from a second angle (66) between a second side (65), located opposite the first side, of the rib and of the carrier plate (31).

8. Plane load-bearing structure suitable for a display device in a motor vehicle, having at least one carrier (30) according to one of the preceding claims.

9. Plane load-bearing structure according to Claim 8, **characterized in that** a holding device (74) for holding at least one securing means is arranged on the carrier, between the ribs, and **in that** the securing means is guided adjacent to the carrier.

## Revendications

1. Support, adapté pour un dispositif d'affichage, doté d'un panneau de support (31), dans lequel le panneau de support (31) comporte deux côtés plats en face l'un de l'autre (32, 33), dans lequel plusieurs nervures (34, 36, 38, 39) sont à chaque fois formées d'une pièce sur les deux côtés (32, 33), dans lequel les nervures (34, 36, 38, 39) sont orientées respectivement parallèlement l'une à l'autre sur les deux côtés (32, 33), dans lequel les nervures (34, 36, 38, 39) sont orientées sur les deux côtés (32, 33) dans la même première direction (35), dans lequel les nervures (34, 36) sur un premier côté (32) sont, par rapport aux nervures (36, 38) sur le deuxième côté (33) opposé au premier côté (32), agencées en décalage dans une deuxième direction (37) perpendiculaire à la première direction (35) de telle sorte que les nervures sur le premier côté (32) et sur le deuxième côté (33) ne se font pas face ou ne se font pas face sur toute leur section transversale et dans lequel des évidements continus (45) sont pratiqués dans le panneau de support (31) du premier côté (32) au deuxième côté (33).

2. Support d'après la revendication 1, **caractérisé en ce que**, dans au moins une nervure (34, 36, 38, 39) sur au moins un côté, des évidements (42, 50) sont pratiqués entre un bord avant (43) de la nervure (34, 36, 38, 39) et le côté (32, 33).

3. Support d'après la revendication 2, **caractérisé en ce que** les évidements (45) dans le panneau de support (31) comprennent également la zone sous une nervure, dans laquelle la nervure (34) comportae un évidement (42).

4. Support d'après l'une des revendications précédentes, **caractérisé en ce qu'**au moins une partie des évidements (42, 45, 50) possède une forme rectangulaire.

5. Support d'après la revendication 4, **caractérisé en ce que** la forme rectangulaire possède des coins arrondis.

6. Support d'après l'une des revendications précédentes, **caractérisé en ce que** les nervures (34, 36, 38, 39) possèdent sur au moins un côté une hauteur différente et/ou une largeur différente par rapport au panneau de support (31).

7. Support d'après l'une des revendications précédentes, **caractérisé en ce que** pour au moins une nervure (61) un premier angle (64) entre une première surface latérale (63) de la nervure (61) et le panneau de support (31) est différent d'un deuxième angle (66) entre un deuxième côté (65) de la nervure, faisant face au premier côté, et le panneau de support (31).

8. Structure porteuse plane, adaptée pour un dispositif d'affichage dans un véhicule à moteur, dotée d'au moins un support (30) d'après l'une des revendications précédentes.

9. Structure porteuse plane d'après la revendication 8, **caractérisée en ce qu'**un dispositif d'accueil (74) est agencé sur le support entre les nervures pour accueillir au moins un moyen de fixation et **en ce que** le moyen de fixation est guidé de manière adjacente au support.
